# EUROPÄISCHE PATENTSCHRIFT

(11) **EP 0 518 946 B1**
(45) Veröffentlichungstag und Bekanntmachung des Hinweises auf die Patenterteilung: **06.12.1995**
(21) Anmeldenummer: 91905643.2
(22) Anmeldetag: 02.03.1991
(51) Int. Cl.: H04N 11/00

(54) **Verfahren zur Übertragung eines Videosignals**
Method for transmitting a video signal
Procédé pour la transmission d'un signal vidéo

(30) Priorität: 07.03.1990 DE 4007092; 07.07.1990 DE 4021698
(43) Veröffentlichungstag der Anmeldung: 23.12.1992
(73) Patentinhaber: Deutsche Thomson-Brandt GmbH, 78003 Villingen-Schwenningen (DE)
(72) Erfinder: PLANTHOLT, Martin, D-6277 Bad Camberg 2 (DE)
(74) Vertreter: Wördemann, Hermes, Dipl.-Ing.
(86) Internationale Anmeldenummer: EP9100397
(87) Internationale Veröffentlichungsnummer: WO9114346

(56) Entgegenhaltungen:
- EP-A- 0 253 623
- DE-C- 3 414 452
- IEEE Transactions on Consumer Electronics and 35, Nr. 3, August 1989, (New York, US) Y. Kanatsugu et al.: "Development of Muse Family Systems", Seiten 153-158

## Beschreibung

Die Erfindung betrifft ein Verfahren zur Übertragung eines Videosignals nach dem Oberbegriff des Anspruchs 1.

Für die Einführung eines 16:9-Breitbildformates in bestehende Fernsehstandards (z.B. PAL, SECAM, NTSC) mit dem Format 4:3 wird das sogenannte 'letterbox'-Verfahren diskutiert. Bei diesem Verfahren wird in kompatibler Weise auf dem 4:3-Empfänger die 16:9-Bildinformation mit schwarzen Streifen am oberen und unteren Bildrand dargestellt. Zur Anpassung der Geometrieverhältnisse auf dem 4:3-Empfänger bedarf es dazu einer vertikalen Transcodierung, die im sichtbaren Bildfenster auf dem 4:3-Empfänger nur 432 aktive Zeilen darstellt. Die restlichen 144 Zeilen des aktiven 4:3-Bildbereichs erscheinen auf dem 4:3-Empfänger als schwarze Streifen zu je 72 Zeilen am oberen und unteren Bildrand. Eine Beschreibung eines entsprechenden Verfahrens findet sich in "Verbesserungsmöglichkeiten und Entwicklungstendenzen bei PAL", G. Holoch, Vortrag FKTG am 17.01.1989, Berlin.

Zur formatfüllenden Darstellung auf einem 16:9-Empfänger werden jedoch zusätzliche Informationen des 16:9-Quellensignals benötigt, d.h. beispielsweise die Informationen der 144 Zeilen, die im 4:3-Empfänger als schwarze Streifen erscheinen. Die Information der 144 Zeilen kann nach "Die neuen Wege des alten PAL", A. Ziemer, E. Matzel, Funkschau 18/1989, als Zusatzinformation im sog. Ultraschwarz-Bereich übertragen werden. Es wird dabei der Videosignal-Amplitudenbereich zwischen Schwarzpegel und z.B. der halben Synchronimpulshöhe ausgenutzt. Dadurch ist die eingelagerte Zusatzinformation auf dem 4:3-Empfänger nicht sichtbar.

Andere Zusatzinformationen, die in gleicher Weise übertraaen werden können, sind in der DE-A-39 30 964 beschrieben.

Bei der Übertragung von Zusatzinformationen in der beschriebenen Form hat sich gezeigt, daß Kompatibilitätsprobleme durch Synchronisationsschwierigkeiten beim herkömmlichen 4:3-Empfänger auftreten können. Diese äußern sich beispielsweise in einer nicht stabilen Vertikalsynchronisation oder auch in einem Ausreißen von Zeilen des sichtbaren Bildfensters (in der Nähe der Schwarzstreifen). Zurückzuführen sind diese Synchronisationsprobleme auf die Übertragung von niederfrequenten Spektralanteilen (Gleichspannungsanteil) der Zusatzinformation mit hohem Energieanteil.

Der Erfindung liegt die Aufgabe zugrunde, ein kompatibles Übertragungssystem anzugeben, welches Zusatzinformationen für einen 16:9-Empfänger überträgt, insbesondere mit einer verbesserten Rückwärtskompatibilität zu bekannten 4:3-Empfängern.

Diese Aufgabe wird durch die im Patentanspruch 1 angegebenen Merkmale gelöst. Vorteilhafte Weiterbildungen der Erfindung sind in den Unteransprüchen angegeben.

Die zu übertragende Zusatzinformation wird in einer Restseitenbandmodulation auf den Farbträger, z.B. des PAL-Systems, aufmoduliert. Dadurch werden niederfrequente Spektralanteile und ein eventuell vorhandener Gleichspannungsanteil mit statistisch hohem Energieanteil auf den hochfrequenten Farbträger verlagert. Die hochfrequenten Anteile niedriger Energie der Basisbandinformation werden dadurch im niederfrequenten Bereich übertragen. Das Modulationsverfahren führt somit zu einer Spiegelung des Originalspektrums der Zusatzinformation an der Achse der Farbträgerfrequenz.

Weiterhin läßt sich durch dieses Verfahren eine höhere Aussteuerung im Ultraschwarzbereich erreichen, da bekannte Empfängerschaltungen in der Regel mit einem Tiefpaß vor der Synchronimpulsaufbereitung arbeiten und somit durch die hochfrequente Übertragung hoher Energieanteile keine Beeinträchtigung in der Synchronisation auftritt. Die größere Aussteuerungsmöglichkeit wirkt sich vorteilhaft auf das Signal-Rauschverhältnis der Zusatzinformation aus.

Nachfolgend wird die Erfindung anhand der Zeichnungen näher erläutert. Es zeigen:
- Fig. 1: ein bekanntes Farbfernsehsignal,
- Fig. 2: eine nach einem bekannten Verfahren eingelagerte Zusatzinformation im Ultraschwarzbereich,
- Fig. 3: die erfindungsgemäße Basisband-Spektralverteilung,
- Fig. 4: die Durchlaßcharakteristik eines bekannten ZF-Filters,
- Fig. 5: bekannte PAL-Mittelung und -Demodulation,
- Fig. 6: erfindungsgemäße Kompensation von Störkomponenten beim kompatiblen Empfang.

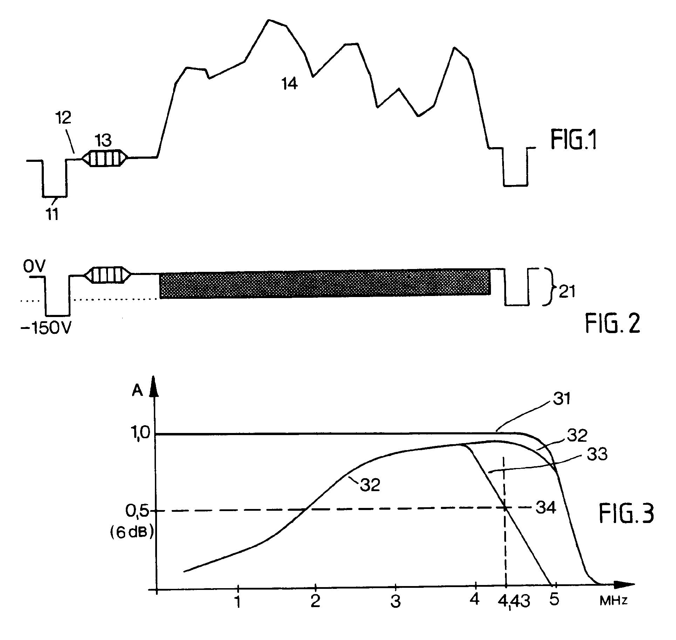

Fig. 1 zeigt ein FBAS-Signal mit Synchronimpuls 11, Schwarzschulter 12, Farbburst 13, sowie dem eigentlichen Videosignal 14.
Fig. 2 zeigt eine eingelagerte Zusatzinformation im Ultraschwarzbereich des Videosignals, wie es in "Die neuen Wege des alten PAL", A. Ziemer, E. Matzel, Funkschau 18/1989, beschrieben ist. Man erkennt den relativ kleinen Amplitudenbereich für die Zusatzinformation zwischen halber Synchronimpulshöhe und Schwarzpegel.

Fig. 3 zeigt den Amplitudenfrequenzgang 31 eines PAL-Übertragungskanales, die Restseitenbandmodulation 32 des Farbträgers sowie die erforderliche Nyquistflanke 33 mit dem -6 dB-Punkt 34.
Durch die Modulation des Farbträgers mit der Zusatzinformation in Form einer Restseitenbandmodulation wird vorteilhaft die Übertragung einer Gleichspannungsanteil-behafteten bzw. einer mit niedrigen Frequenzanteilen höherer Amplitude behafteten Zusatzinformation ermöglicht, ohne herkömmliche Empfänger in der Synchronisation zu beeinträchtigen. Darüberhinaus kann der Amplitudenbereich für die gesamte Zusatzinformation deutlich vergrößert werden auf einen Bereich, der zwischen Synchronimpulsboden und einem Pegel oberhalb des Schwarzwertes liegt. Dadurch ergibt sich vorteilhaft eine Verbesserung im Signal-Rauschverhältnis für die Zusatzinformation.

Die erforderliche Filterung zur Formung des Restseitenbandes mit einem Nyquistflankenverlauf bezüglich der Farbträgerfrequenz (d.h. 6 dB Dämpfung bei der Farbträgerfrequenz) kann prinzipiell auf der Sender- oder Empfängerseite erfolgen oder auch durch das Zusammenwirken zweier Filter, wobei z.B. zwei gleiche Filtercharakteristiken im Sender und Empfänger eingesetzt werden.

Bei der letztgenannten Alternative ist es möglich, heute in Fernsehempfängern eingesetzte ZF-Filter (z.B. TSF 5315, Hersteller Sanyo, eingebaut in ZF-Modul IF 2132, Hersteller Thomson-CSF) zu benutzen und damit einen 3 dB-Amplitudenabfall bei der Farbträgerfrequenz im Empfänger herbeizuführen (Farbträgerfrequenz = 34.47 MHz in ZF-Lage).

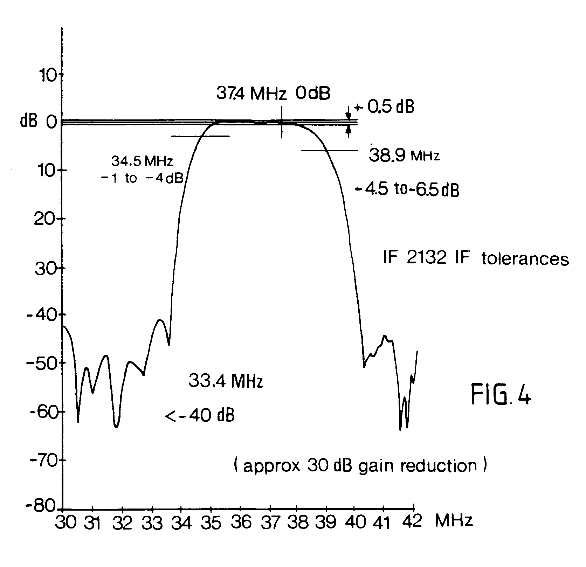

Fig. 4 zeigt die Durchlaßcharakteristik dieses ZF-Filters mit den bauteilspezifischen Toleranzen.
Senderseitig müßte dann ebenfalls eine Filterung erfolgen, die zu weiteren 3 dB Amplitudenabfall bei der Farbträgerfrequenz führt. Diese Filterung für die Zusatzinformationen wird dann vorteilhaft ebenfalls in ZF-Lage mit einer ähnlichen Filtereinrichtung ausgeführt. Es ergibt sich hierdurch der Vorteil, daß für die erfindungsgemäße Anwendung der Restseitenbandmodulation zumindest im Empfänger keine andere als die bisher verwandte ZF-Charakteristik eingesetzt zu werden braucht.

In der DE-A-39 30 964 ist dargelegt, daß eine Zusatzinformation aus Signalteilen besteht, die aus dem übertragenen Zeilensprungsignal durch empfängerseitige Nachverarbeitung ein Signal formen, das mit 432 Zeilen aktivem Bildinhalt und einem Bildseitenverhältnis von 16:9 formatfüllend als progressiv abgetastetes Bild dargestellt wird.

Das erfindungsgemäße Verfahren kann für die Übertragung einer derartigen Zusatzinformation angewandt werden.
Dazu wird die Zusatzinformation senderseitig pro Zeile für die 432 Zeilen, die am Empfänger zur Darstellung kommen sollen, generiert. Es ergeben sich somit 432 Zusatzinformations-Teile, für deren Übertragung nur 144 Zeilen (zwei mal 72 Zeilen Randstreifen) zur Verfügung stehen.
Die erforderliche Reduktion um den Faktor drei (432 / 144) läßt sich durch eine Zeitmultiplextechnik erreichen, indem jede der 432 Zusatzinformations-Teile um den Faktor drei zeitkomprimiert wird. So lassen sich pro zur Verfügung stehender Übertragungszeile (insgesamt 144) die Zusatzinformationen für je drei Zeilen zeitsequentiell übertragen. Mit der Zeitkompression ist eine entsprechende Bandbreitenerhöhung um denselben Faktor, d.h. drei, verbunden. Darum darf die Basisband-Quell-Bandbreite der Zusatzinformation maximal nur ein Drittel der Übertragungsbandbreite des Kanals sein. Bei einem PAL-Videosignal ergibt sich eine maximale Bandbreite von ca. 5 MHz / 3 = 1.67 MHz.
Weil die Zusatzinformation tatsächlich aber auf den Farbträger in Form einer Restseitenbandmodulation aufmoduliert wird, ergibt sich daraus eine maximal mögliche Bandbreite für die Zusatzinformation von 4.43 MHz / 3 = 1.48 MHz. Zugunsten der oben beschriebenen Vorteile des Modulationsverfahrens tritt eine nur geringfügige Einschränkung der Bandbreite um ca. 11 % ein.

Bei Anwendung des erfindungsgemäßen Verfahrens im PAL-Standard kann der kompatible Empfang durch die Wahl einer bestimmten Phasenlage des PAL-Farbträgers als Modulationsfrequenz (4.43 MHz) vorteilhaft beeinflußt werden, weil dann die Sichtbarkeit der durch die übertragene Zusatzinformation bedingten Störungen in den Randstreifen reduziert wird.

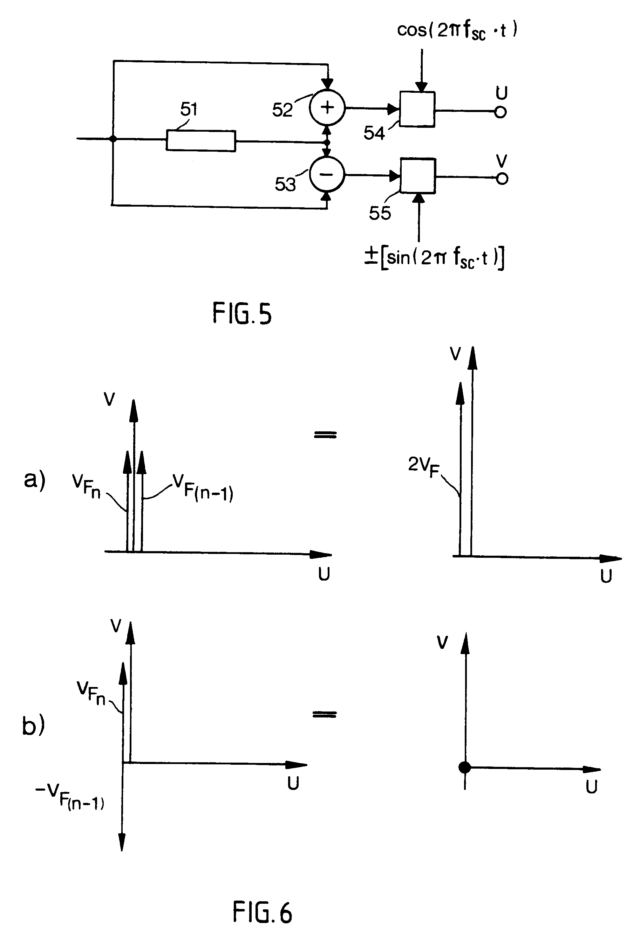

Standard-PAL-Empfänger enthalten zur Unterdrückung von Phasenfehlern eine sogenannte PAL-Mittelungsschaltung, an die sich die eigentliche PAL-Demodulation mit den U- und V-Demodulatoren anschließt. Fig. 5 zeigt eine Schaltung mit PAL-Mittelung, bestehend aus einem Laufzeitglied 51, einer Summationsstufe 52 und einer Subtraktionsstufe 53. An die Summationsstufe 52 schließt sich der U-Demodulator 54 und an die Subtraktionsstufe 53 der V-Demodulator 55 an.
Wird beispielsweise als Phase des Modulationsträgers die positive Phase des V-Trägers zur Übertragung der Zusatzinformation in allen Zeilen gewählt (d.h. keine zeilenalternierende PAL-Umschaltung des V-Trägers), so entsteht am Ausgang der Summationsstufe 52 aus den farbträgerfrequenten Zeigern VFn von aktueller Zeile n und vorangegangener Zeile n-1 als Ergebnis ein Zeiger mit dem Wert 2*VF (Fig. 6a), welcher der U-Demodulation zugeführt wird. Da die Modulations-Funktionen zueinander orthogonal sind (90 Grad Phasenversatz zwischen U- und V-Träger), liefert der U-Demodulator 55 aus dem 2*VF-Zeiger den Wert Null und eine Komponente mit zweifacher Farbträgerfrequenz, die durch einen in bekannten PAL-Empfängern angeordneten Tiefpaß im Signalweg der U-Komponente unterdrückt wird.
Die Subtraktionsstufe 53 liefert schon am Eingang des V-Modulators 55 den Wert Null (Fig. 6b).
Vorteilhaft heben sich somit beim kompatiblen Empfang mögliche Störmuster durch die Zusatzinformation tendenziell auf, wenn sich die Zusatzinformationen von Zeile zu Zeile nicht wesentlich verändern.
Das gleiche Resultat ergibt sich, wenn als Modulationsphase die negative V-Träger-Phase gewählt wird. In Fig. 6a liefert dann die Summationsstufe 52 den Zeiger -2*VF, der dann wiederum mit dem U-Träger demoduliert wird und als Ergebnis den Wert Null hat.

## Patentansprüche

1. Verfahren zur Übertragung eines Videosignals in einer ersten Norm zum-kompatiblen Empfang auf einem Empfänger der ersten Norm oder auf einem Empfänger einer zweiten Norm, insbesondere für die Übertragung eines Videosignals (14) nach dem sogenannten Letterbox-Verfahren, mit Zusatzinformationen, insbesondere im Ultraschwarzbereich (21) des Videosignals (14), wobei die Zusatzinformationen insbesondere in den Bildbereichen des Videosignals (14) angeordnet sind, die bei der Wiedergabe mit dem Empfänger der ersten Norm außerhalb des Bildbereichs für die zweite Norm liegen, **dadurch gekennzeichnet,** daß die Zusatzinformationen auf einen Farbträger (4,43) aufmoduliert sind (Fig. 3), wobei mit Hilfe von Filtermitteln (Fig. 4) eine Restseitenbandmodulation herbeigeführt wird und wobei die niederfrequenten Anteile der Zusatzinformationen, einschließlich eines eventuellen Gleichspannungsanteiles, im Farbträger-Frequenzbereich (32) oberhalb und direkt unterhalb des Farbträgers (4,43) übertragen werden.

2. Verfahren nach Anspruch 1, **dadurch gekennzeichnet**, daß die auf den Farbträger (Fig. 3) modulierten Zusatzinformationen so ausgesteuert werden, daß das Modulationssignal zusätzlich einen Amplitudenbereich oberhalb des Schwarzwertes (12) des Videosignals (14) ausnutzt.

3. Verfahren nach Anspruch 1 und/oder 2, **dadurch gekennzeichnet**, daß eine Demodulation der Zusatzinformationen durch Synchronisierung mit dem Farbburst (13) herbeigeführt wird.

4. Verfahren nach einem oder mehreren der Ansprüche 1 bis 3, **dadurch gekennzeichnet,** daß Mittel im Sender und/oder Empfänger für die zweite Norm für das Modulationssignal eine Nyquist-Flanke (33) bezüglich der Farbträgerfrequenz bewirken.

5. Verfahren nach Anspruch 4, **dadurch gekennzeichnet**, daß die Mittel ein ZF-Filter im Empfänger der zweiten Norm enthalten.

6. Verfahren nach einem oder mehreren der Ansprüche 1 bis 5, **dadurch gekennzeichnet,** daß die Zusatzinformationen im Sender zeitkomprimiert werden, insbesondere um den Faktor drei.

7. Verfahren nach Anspruch 6, **dadurch gekennzeichnet,** daß die Zusatzinformationen im Empfänger der zweiten Norm zeitexpandiert werden, insbesondere um einen Faktor drei.

8. Verfahren nach einem oder mehreren der Ansprüche 1 bis 7, **dadurch gekennzeichnet,** daß die Zusatzinformationen mit einer zeilenalternativ konstanten Phase dem Farbträger aufmoduliert werden (Fig. 6).

9. Verfahren nach einem der Ansprüche 1 bis 8 **dadurch gekennzeichnet**, daß die übertragenen Zusatzinformationen in einem 16:9-Empfänger zur Bildung der darzustellenden 16:9-Bildsignale verwendet verden.

## Claims

1. Method for the transmission of a video signal in a first standard for compatible reception on a receiver for the first standard or on a receiver of a second standard, particularly for the transmission of a video signal (14) according to the so-called letter-box method, with additional information, particularly in the infrablack range (21) of the video signal (14), wherein the additional information is located in particular in the picture sections of the video signal (14) which lie - when reproduced by the receiver of the first standard - outside the picture area for the second standard, characterised in that the additional information is modulated upon a color carrier (4,43) (Fig.3) wherein a vestigial sideband modulation is attained by means of filtering means (Fig.4) and wherein the low frequency parts of the additional information, including a possible direct voltage part, are transmitted in the color carrier higher frequency range (32) and directly beneath the color carrier (4,43).

2. Method according to claim 1, characterised in that the additional information modulated on the color carrier (Fig.3) is level controlled in such a way that the modulation signal additionally has an amplitude range beyond the black level (12) of the video signal.

3. Method according to claim 1 and/or 2, characterised in that a demodulation of the additional information is attained by means of synchronization with the color burst (13).

4. Method according to one or more of claims 1 to 3, characterised in that means in the transmitter and/or receiver for the second standard cause a Nyquist slope (33) with respect to the color carrier frequency.

5. Method according to claim 4, characterised in that the means comprise an IF filter in the receiver of the second standard.

6. Method according to one or more of claims 1 to 5, characterised in that the additional information is compressed in time in the transmitter, in particular by the factor three.

7. Method according to claim 6, characterised in that the additional information is expanded in time in the receiver of the second standard, in particular by a factor three.

8. Method according to one or more of claims 1 to 7 characterised in that the additional information is modulated on the color carrier with constant phase in alternate lines.

9. Method according to one of claims 1 to 8 characterised in that the additional information transmitted is used in a 16:9 picture aspect ratio receiver to form a 16:9 ratio image for display.

## Revendications

1. Procédé pour la transmission d'un signal vidéo selon une première norme pour permettre la réception compatible sur un récepteur d'une première norme ou sur un récepteur d'une seconde norme, notamment pour la transmission d'un signal vidéo (14) selon le procédé dit "letterbox", avec des informations additionnelles transmises tout particulièrement dans la gamme ultra-noire (21) dudit signal vidéo (14), lesdites informations additionnelles étant surtout disposées dans les plages d'image du signal vidéo (14) qui, lors de la reproduction sur un récepteur de la première norme, sont situées en dehors de la plage d'image réservée à la seconde norme, **procédé caractérisé en ce** que lesdites informations additionnelles sont modulées sur une sous-porteuse de chrominance (4,43) (fig. 3), des moyens de filtrage (fig. 4) étant prévus pour effectuer une modulation à bande latérale résiduelle et faisant que les portions à basse fréquence des informations additionnelles, y compris une éventuelle portion de tension continue, sont transmises au-dessus ou directement au-dessous de la sous-porteuse de chrominance (4,43) dans la gamme des fréquences de la sous-porteuse de chrominance (32).

2. Procédé selon la revendication 1 **caractérisé en ce** que les informations additionnelles modulées sur la sous-porteuse de chrominance (fig. 3) sont réglées de telle manière que le signal de modulation utilise en plus une gamme d'amplitudes située au-dessus du niveau du noir (12) du signal vidéo (14).

3. Procédé selon l'une quelconque des revendications 1 et 2 **caractérisé en ce** qu'une démodulation des informations additionnelles est réalisée par synchronisation avec la giclée de signaux couleur (13).

4. Procédé selon l'une quelconque ou plusieurs des revendications 1 à 3 **caractérisé en ce** que des moyens prévus dans l'émetteur et/ou le récepteur selon la seconde norme servent à inculquer un flanc de Nyquist (33) au signal de modulation par rapport à la fréquence porteuse de chrominance.

5. Procédé selon la revendication 4 **caractérisé en ce** que lesdits moyens comportent un filtre F.I. au niveau du récepteur selon la seconde norme.

6. Procédé selon l'une quelconque ou plusieurs des revendications 1 à 5 **caractérisé en ce** que lesdites informations additionnelles sont comprimées dans le temps, notamment par un facteur de trois, au niveau du récepteur.

7. Procédé selon la revendication 6 **caractérisé en ce** que lesdites informations additionnelles sont étendues dans le temps, notamment par un facteur de trois, au niveau du récepteur selon la seconde norme.

8. Procédé selon l'une quelconque ou plusieurs des revendications 1 à 7 **caractérisé en ce** que lesdites informations additionnelles sont modulées sur la sous-porteuse de chrominance avec une phase constante alternante des lignes (fig. 6).

9. Procédé selon l'une quelconque des revendications 1 à 8 **caractérisé en ce** que les informations additionnelles transmises sont utilisées dans un récepteur 16/9 pour former les signaux d'image 16/9 à reproduire.
